# EUROPEAN PATENT SPECIFICATION

(11) **EP 2 221 318 B1**
(45) Date of publication and mention of the grant of the patent: **07.11.2012**
(21) Application number: 08721196.7
(22) Date of filing: 03.03.2008
(51) Int. Cl.: C08F 2/26, C08F 14/18

(54) **PROCESS FOR PRODUCING FLUOROELASTOMER**
VERFAHREN ZUR HERSTELLUNG VON FLUORELASTOMER
PROCÉDÉ DE PRODUCTION DE FLUOROÉLASTOMÈRES

(30) Priority: 28.11.2007 JP 2007306870
(43) Date of publication of application: 25.08.2010
(73) Proprietor: Unimatec Co., Ltd., Tokyo 105-8585 (JP)
(72) Inventor: MAEDA, Mitsuru, Kitaibaraki-shi Ibaraki 319-1544 (JP); SHIMIZU, Toshiharu, Kitaibaraki-shi Ibaraki 319-1544 (JP); ENOKIDA, Takashi, Kitaibaraki-shi Ibaraki 319-1544 (JP)
(74) Representative: Beckmann, Claus
(86) International application number: PCT/JP2008/053776
(87) International publication number: WO 2009/069320

(56) References cited:
- EP-A1- 0 456 019
- WO-A1-01/32726
- WO-A1-2005/063827
- WO-A1-2007/046377
- WO-A1-2008/001895
- JP-A- 4 288 305
- JP-A- 5 222 126
- JP-A- 6 336 510
- JP-A- 10 130 341
- JP-A- 57 000 135
- JP-A- 58 042 607
- JP-A- 63 308 008
- JP-A- 2000 191 709
- JP-A- 2002 058 966
- JP-A- 2005 325 327
- JP-B- 40 021 438
- JP-B- 47 048 901
- US-A- 2 559 752
- US-A- 2 559 752
- US-A- 4 983 697
- US-A- 6 150 485
- US-A1- 2003 114 614
- US-A1- 2006 235 157
- US-B1- 6 187 885
- US-B1- 6 734 264

## Description

### [Technical Field]

The present invention relates to a process for manufacturing a fluoroelastomer. More specifically, the present invention relates to a process for manufacturing a fluoroelastomer suitable for injection molding by reducing the polymer Mooney viscosity to improve the fluidity.

### [Background Art]

Various fluorine-containing compounds are known to be used as emulsifiers in the polymerization reaction of fluorinated olefins. Examples thereof are as follows:
(1) an emulsifier represented by the general formula:

   Rf¹O(CFXCF₂O)ₚCFXCOOM,

   Rf¹CF₂(CH₂)ₙO(CFXCF₂O)ₚCFXCOOM,

   M¹OCO(CF₂)ₘCOOM², or

   Rf⁸(CH₂)ₙOCOCH(SO₉M)CH₂COO(CH₂)ₙRf⁸,

   and having less impact on the environment and ecosystem;
(2) an emulsifier represented by the general formula:

   F(CF₂CF₂)ₙCH₂CH₂SO₃M;
(3) an emulsifier comprising a polyperfluoroether carboxylic acid represented by the general formula:

   CₙF₂ₙ₊₁O(CₙF₂ₙO)ₘCₙ₋₁F₂₋ₙCOOH

   or a salt thereof;
(4) an emulsifier comprising a fluorine-containing sulfobutanedioic acid ester derivative represented by the general formula:

   YRf¹(CH₂)ₘOCOCH(SO₃M)CH₂COO(CH₂)ₙRf²Y; and
(5) an emulsifier comprising an aromatic fluorine-containing surfactant represented by the general formula:

   C₃ₙF₆ₙ₋₁OArZ.

   [Patent Document 11 JP-A-2003-119204
   [Patent Document 2] Japanese Patent Publication 2004-509993
   (Japanese translation of PCT international application)
   [Patent Document 3] JP-B-61-46003
   [Patent Document 4] JP-A-2004-359870
   [Patent Document 5] JP-A-2002-308913

Further, there is a proposal to conduct the polymerization reaction of fluorinated olefins using a surfactant represented by the general formula: R¹R²R³CL⁻M⁺ (L⁻: SO₃⁻, OSO₃⁻, -PO₃⁻, -OPO₃⁻, or -COO⁻). When using this surfactant, the polymerization reaction can be performed in the presence of a small amount of the surfactant with high production efficiency.
[Patent Document 6] WO 2005/063827

Meanwhile, with regard to fluoroelastomers, materials having excellent fluidity are demand for efficient injection molding. Generally, in order to increase the fluidity, the polymer Mooney viscosity is reduced by lowering the molecular weight; however, such a lower molecular weight causes a decrease in the polymerization reaction rate, resulting in a reduction of productivity. Furthermore, since deterioration of physical properties, such as tensile strength, compression set characteristics, and hot tear resistance, is induced, it is necessary to improve these properties.

### [Disclosure of the Invention]

### [Problems to be Solved by the Invention]

An object of the present invention is to provide a method for manufacturing a fluoroelastomer suitable for injection molding by reducing the polymer Mooney viscosity to improve the fluidity.

### [Means for Solving the Problem]

The object of the invention is achieved by a method for manufacturing a fluoroelastomer used for injection molding, which comprises carrying out a copolymerization reaction of vinylidene fluoride and hexafluoropropene, a copolymerization reaction of vinylidene fluoride, hexafluoropropene and tetrafluoroethylene, a copolymerization reaction of perfluoro(C₁-C₅ alkyl vinyl ether) and tetrafluoroethylene, or a copolymerization reaction of vinylidene fluoride, perfluoro(C₁-C₅ alkyl vinyl ether) and tetrafluoroethylene, in the presence of a cured site-forming monomer or a bromine- and iodine-containing compound represented by the general formula: RBrₙIₘ (wherein R is fluorohydrocarbon group, chlorofluorohydrocarbon group, chlorohydrocarbon group, or hydrocarbon group; and n and m are independently 1 or 2), using a ωH perfluorocarboxylic acid represented by the general formula: H(CF₂)ₙCOOM (wherein M is hydrogen atom, alkali metal, or ammonium group; and n is 6, 7, or 8) or a salt thereof, as an emulsifier.

### [Advantageous Effects of Invention]

The fluoroelastomer produced by the process of the present invention has a lower Mooney viscosity ML₁₊₁₀(121°C) of 5 to 80 and thereby has an improved fluidity, which is essential for injection molding materials, as a result of the polymerization reaction of a fluorinated olefin using a ωH perfluorocarboxylic acid (salt) as an emulsifier. Accordingly, the productivity in injection molding can be enhanced. Moreover, there is neither remarkable decrease in the polymerization rate of the polymerization reaction nor deterioration of the physical properties of the vulcanizate, such as tensile strength, compression set characteristics, and hot tear resistance.

Here, when the polymerization reaction of fluorinated olefins using the emulsifiers used in the present invention is compared with the polymerization reaction of fluorinated olefins using ammonium perfluorooctanoate, which is commonly used as a general-purpose emulsifier, there is almost no difference in the vulcanizate physical properties between the present fluoroelastomers and the corresponding fluoroelastomers having the same copolymerization compositions and vulcanization compositions. That is, the effect of remarkably reducing the value of Mooney viscosity ML₁₊₁₀(121°C) with little effect on the vulcanizate physical properties is demonstrated.

### [Best Mode for Carrying Out the Invention]

In the method of the present invention, compounds represented by the formula:

H(CF₂)₆COOM,

H(CF₂)₇COOM, or

H(CF₂)₈COOM

are used as emulsifiers in the polymerization reaction of fluorinated olefins. Here, when compounds wherein n is outside the range of 6 to 8 are used, those wherein n is less than 6 result in inferior emulsifying properties, and the polymer precipitates in the course of the polymerization; whereas those wherein n is more than 8 cause inferior detergency with water, and the residual emulsifier remains in the polymer. Such ωH perfluorocarboxylic acids (salts) are known; for example, Patent Document 6, as described above, exemplifies a ωH perfluorocarboxylic acid as a surfactant usable in combination with a surfactant represented by the general formula: R¹R²R³CL⁻M⁺; however, there is no example using a ωH perfluorocarboxylic acid alone in the polymerization reaction of fluorinated olefins. These compounds are produced in accordance with the process disclosed in Patent Document 7, described below. As alkali metal salts, sodium salt, potassium salt, etc., are generally used.
[Patent Document 7] U.S. Pat. No. 2,559,629

Fluorinated olefins are subjected to polymerization reaction in the presence of such a ωH perfluorocarboxylic acid (salt) emulsifier

These fluorinated olefins are used in combination to form the following copolymers: vinylidene fluoride-hexafluoropropene copolymer, vinylidene fluoride-hexafluoropropene-tetrafluoroethylene terpolymer, perfluoro(lower alkyl vinyl ether)-tetrafluoroethylene copolymer, or vinylidene fluoride-perfluoro(lower alkyl vinyl ether)-tetrafluoroethylene terpolymer. These copolymers are copolymerized in a known copolymerization ratio so as to have elastomeric properties.

The polymerization reaction of fluorinated olefins is performed in the presence of a cured site-forming monomer or a bromine- and iodine-containing compound as defined above. Such a cured site-forming monomer is at least one of a bromine group- or iodine group-containing olefin and a bromine group-, iodine group- or nitrile group-containing vinyl ether.

Examples of bromine-containing monomer compounds to be used to form a cross-linked site include monobromoethylene, 1-bromo-2,2-difluoroethylene, bromotrifluoroethylene, perfluoroallyl bromide, 4-bromo-1,1,2-trifluorobutene-1, 4-bromo-3,3,4,4-tetrafluorobutene-1, 4-bromo-1,1,3,3,4,4-hexafluorobutene-1, 4-bromo-3-chloro-1,1,3,4,4-pentafluorobutene-1, 6-bromo-5,5,6,6-tetrafluorohexene-1, 4-bromoperfluorobutene-1, 3,3-difluoroallyl bromide, and other brominated olefins; a bromine group-containing vinyl ether represented by the following general formula is preferably used:

BrRf-O-CF=CF₂

BrRf: a bromine group-containing perfluoro lower alkyl group

Examples of such bromine group-containing vinyl ethers include those represented by CF₂BrCF₂OCF=CF₂, CF₂Br(CF₂)₂OCF=CF₂, CF₂Br(CF)₃OCF=CF₂, CF₃CFBr(CF₂)₂OCF=CF₂, CF₂Br(CF₂)₄OCF=CF₂.
These compounds are described in detail in U.S. Pat. No. 4,745,165.

In addition to these compounds, for example, a bromine group-containing vinyl ether represented by the general formula: ROCF=CFBr or ROCBr=CF₂ (R: lower alkyl group or fluoroalkyl group), which is described in U.S. Pat. No. 4,564,662, can also be used.

Further, examples of iodine-containing monomer compounds include monoiodoethylene, iodotrifluoroethylene, 1,1-difluoro-2-iodoethylene, 4-iodo-3,3,4,4-tetrafluorobutene-1, perfluoro(2-iodoethyl vinyl ether).

Moreover, examples of cyano group-containing perfluorovinyl ethers include compounds represented by the following formulae:

CF₂=CFO(CF₂)ₙOCF(CF₃)CN (n: 2-5)

CF₂=CFO(CF₂)ₙCN (n: 2-12)

CF₂=CFO[CF₂CF(CF₃)O]ₘ(CF₂)ₙCN (n: 1-4; m: 1-2)

These cured site-forming monomers are used at a ratio of 2 mol%, and preferably 0.03 to 1 mol%, based on the total amount of comonomers used in the copolymerization reaction. Although the copolymerization of cured site-forming monomers results in desirable improvement of compression set, the use of the cured site-forming monomers at a ratio more than this range causes a decrease in elongation of the vulcanizates.

Moreover, an iodine- and bromine-containing compound represented by the general formula: RBrnIm (wherein R is fluorohydrocarbon group, chlorofluorohydrocarbon group, chlorohydrocarbon group, or hydrocarbon group; and n and m are independently 1 or 2) can also be used. This compound acts as a chain transfer agent, which adjusts the molecular weight to improve the processability.

The iodine- and bromine-containing compound represented by the above formula is selected from those that do not undergo side reactions under polymerization conditions to lose effectiveness. The R group is generally selected from C₁-C₁₀ fluorohydrocarbon group, chlorofluorohydrocarbon group, chlorohydrocarbon group, or hydrocarbon group, any of which may be linked to functional groups, such as -O-, -S-, =NR, -COOH, -SO₂, -SO₃H, and -PO₃H.

Examples of such iodine- and bromine-containing compounds include saturated or unsaturated, aliphatic or aromatic compounds; those wherein n and m are independently 1 are preferably used. Compounds wherein n and/or m are 2 are desirably used in the range where the processability is not impaired, because fluoroelastomers produced therefrom have a three-dimensional structure.
[Patent Document 8] JP-A-2000-7732

Although the polymerization reaction using a ωH perfluorocarboxylic acid (salt) as an emulsifier can be carried out by an emulsion polymerization method, a suspension polymerization method, or a seed polymerization method; an emulsion polymerization method is preferably used in terms of a higher degree of polymerization and economic efficiency.

The emulsion polymerization reaction is carried out using as a catalyst a water-soluble inorganic peroxide, such as ammonium persulfate, or a redox system thereof with a reducing agent in the presence of a ωH perfluorocarboxylic acid (salt) emulsifier, which is generally used at a ratio of 0.01 to 20 wt.%, preferably 0.1 to 10 wt.%, based on the total amount of feed water, generally under conditions where the pressure is about 0 to 10 MPa, preferably 0.5 to 4 MPa, and where the temperature is 0 to 100°C, preferably 20 to 80°C. At this time, it is preferable to supply fluorinated olefins by a divided addition method so that the reaction pressure is maintained at a constant range. In order to adjust the pH in the polymerization system, Na₂HPO₄, NaH₂PO₄, KH₂PO₄, and other electrolyte materials that have buffer capacity, or sodium hydroxide may be added and used. Additionally, chain transfer agents, such as ethyl malonate, acetone, and isopropanol, are suitably used, if necessary.

The polymerization reaction is generally completed for 180 to 600 minutes, although depending on various polymerization conditions. This does not much differ from when an ammonium perfluorooctanoate emulsifier is used. After the completion of the reaction, a potassium alum aqueous solution, sodium chloride aqueous solution, calcium chloride aqueous solution, or the like is added to the obtained aqueous emulsion to coagulate the resulting polymer, followed by washing with water and drying, thereby obtaining a rubbery polymer.

The vulcanization of the obtained fluoroelastomer is generally carried out using an organic peroxide. Examples of organic peroxides include 2,5-dimethyl-2,5-bis(tert-butylperoxy)hexane, 2,5-dimethyl-2,5-bis(tert-butylperoxy)hexine-3, benzoyl peroxide, bis(2,4-dichlorobenzoyl)peroxide, dicumyl peroxide, di-tert-butyl peroxide, tert-butyl cumyl peroxide, tert-butylperoxybenzene, 1,1-bis(tert-butylperoxy)-3,5,5-trimethylcyclohexane, 2,5-dimethylhexane-2,5-dihydroxyperoxide, α,α'-bis(tert-butylperoxy)-p-diisopropylbenzene, 2,5-dimethyl-2,5-di(benzoylperoxy)hexane, tert-butylperoxy isopropyl carbonate.

Together with these organic peroxides, a polyfunctional unsaturated compound is generally used as a co-crosslinking agent. Examples thereof include tri(meth)allyl isocyanurate, tri(meth)allyl cyanurate, triallyl trimellitate, N,N'-m-phenylene bismaleimide, diallyl phthalate, tris(diallylamine)-s-triazine, triallyl phosphite, 1,2-polybutadiene, ethyleneglycol diacrylate, diethyleneglycol di(meth)acrylate, trimethylolpropane trimethacrylate.

The amount of each crosslink-based component is generally as follows: with respect to 100 parts by weight of fluoroelastomer, the organic peroxide content is used 0.1 to 10 parts by weight, preferably
0.5 to 5 parts by weight; and the co-crosslinking agent is used 0.1 to 10 parts by weight, preferably 0.5 to 5 parts by weight.

As vulcanizing agents other than organic peroxides, compounds represented by the following general formulae may also be used. 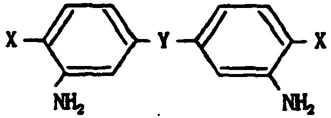 X: a hydroxyl group or an amino group
Y: an alkylidene group, a perfluoroalkylidene group, a -SO₂⁻
group, an -O⁻ group, a -CO- group, or a carbon-carbon bond capable of directly bonding two benzene rings 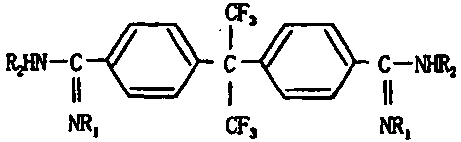 R₁: a hydrogen atom or a hydroxyl group
R₂: a hydrogen atom or an amino group 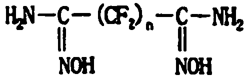 n: 1 to 10 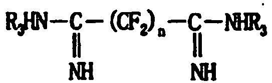 R₃ a hydrogen atom or an amino group
n: 1 to 10
[Patent Document 9] JP-A-2002-3677

The composition comprising the above-described components suitably contains inorganic reinforcing agents or fillers such as carbon black and silica, acid receptors such as ZnO, CaO, Ca(OH)₂, MgO, PbO, and synthetic hydrotalcite, various pigments, processing aids such as polyethyleneglycol monomethyl ether and Crown ether, plasticizers, stabilizers, and other necessary compounding agents. A vulcanizable composition is prepared by kneading using a roll, closed kneader, followed by vulcanization molding under general cross-linking conditions, for example, for 1 to 10 minutes at 160 to 220°C.

Since the fluoroelastomer obtained by the method of the present invention has a low Mooney viscosity ML₁₊₁₀(121°C) of 5 to 80, namely, excellent fluidity, the vulcanization molding is applied to injection molding, compression molding, etc., and is preferably applied to injection molding, to which excellent fluidity is particularly required, to produce sealing materials, such as gaskets, O rings, and packings.

### [Examples]

The following describes the present invention with respect to examples.

### Example 1

Deionized water (4500 ml) and 23 g of ammonium 9H-hexadecafluorononanoate were charged in an autoclave having an inner capacity of 10 L. After the air in the autoclave was sufficiently replaced by nitrogen gas, a mixed gas of vinylidene fluoride [VDF]-hexafluoropropene [HFP] (molar ratio = 18:82) was compressed until the internal pressure reached 1.3 MPa. Then, 3 g of isopropanol was charged, and the internal temperature was increased to 80°C.

After 10 g of ammonium persulfate dissolved in 100 ml of deionized water was charged therein, a mixed gas of VDF-HFP (molar ratio = 56:44) was additionally compressed until the internal pressure reached 3.5 MPa, starting the polymerization reaction. Since the pressure dropped immediately after the reaction was started, the above additional mixed gas was recompressed at the time when the internal pressure dropped to 3.3 MPa, until the internal pressure reached 3.5 MPa. While maintaining the pressure at 3.3 to 3.5 MPa in this manner, the polymerization reaction was continued for 230 minutes.

After the reaction was completed, a 5 wt.% potassium alum aqueous solution was added to the obtained aqueous emulsion to coagulate the resulting copolymer, followed by washing with water and drying, thereby obtaining 1500 g of rubbery copolymer [Polymer A] (copolymer composition molar ratio analyzed by ¹⁹F-NMR: VDF/HFP = 78/22).

### Example 2

Deionized water (4500 ml), 12 g of 1-bromo-2-iodoperfluoroethane, and 23 g of ammonium 9H-hexadecafluorononanoate were charged in an autoclave having an inner capacity of 10 L. After the air in the autoclave was sufficiently replaced by nitrogen gas, a mixed gas of vinylidene fluoride [VDF]-hexafluoropropene [HFP]-tetrafluoroethylene [TFE] (molar ratio = 35:45:20) was compressed until the internal pressure reached 0.8 MPa. Then, 6.5 g of 1,1-difluoro-2-bromoethylene was charged, and the internal temperature was increased to 50°C.

After a mixture of 10 g of ammonium persulfate, 1 g of a ferrous sulfate heptahydrate, and 1 g of sodium sulfite dissolved in 100 ml of deionized water was charged therein, a mixed gas of VDF-HFP-TFE (molar ratio = 52:27:21) was additionally compressed until the internal pressure reached 1.8 MPa, starting the polymerization reaction. Since the pressure dropped immediately after the reaction was started, the above additional mixed gas was recompressed at the time when the internal pressure dropped to 1.7 MPa, until the internal pressure reached 1.8 MPa. While maintaining the pressure at 1.7 to 1.8 MPa in this manner, the polymerization reaction was continued for 398 minutes.

After the reaction was completed, a 5 wt.% potassium alum aqueous solution was added to the obtained aqueous emulsion to coagulate the resulting copolymer, followed by washing with water and drying, thereby obtaining 1250 g of rubbery copolymer [Polymer B] (copolymer composition molar ratio analyzed by ¹⁹F-NMR: VDF/HFP/TFE = 65/17/18).

### Example 3

Deionized water (4500 ml) and 23 g of ammonium 9H-hexadecafluorononanoate were charged in an autoclave having an inner capacity of 10 L. After the air in the autoclave was sufficiently replaced by nitrogen gas, a mixed gas of vinylidene fluoride [VDF]-hexafluoropropene [HFP]-tetrafluoroethylene [TFE] (molar ratio = 35:45:20) was compressed until the internal pressure reached 0.8 MPa. Then, 3 g of isopropanol was charged, and the internal temperature was increased to 50°C.

After a mixture of 10 g of ammonium persulfate, 1 g of a ferrous sulfate heptahydrate, and 1 g of sodium sulfite dissolved in 100 ml of deionized water was charged therein, a mixed gas of VDF-HFP-TFE (molar ratio = 52:27:21) was additionally compressed until the internal pressure reached 1.8 MPa, starting the polymerization reaction. Since the pressure dropped immediately after the reaction was started, the above additional mixed gas was recompressed at the time when the internal pressure dropped to 1.7 MPa, until the internal pressure reached 1.8 MPa. While maintaining the pressure at 1.7 to 1.8 MPa in this manner, the polymerization reaction was continued for 273 minutes.

After the reaction was completed, a 5 wt.% potassium alum aqueous solution was added to the obtained aqueous emulsion to coagulate the resulting copolymer, followed by washing with water and drying, thereby obtaining 1250 g of rubbery copolymer [Polymer C] (copolymer composition molar ratio analyzed by ¹⁹F-NMR: VDF/HFP/TFE = 65/17/18).

### Example 4

| | |
|---|---|
| Deionized water | 4000 ml |
| 1-bromo-2-iodoperfluoroethane | 6 g |
| Ammonium 9H-hexadecafluorononanoate | 54 g |
| Disodium hydrogen phosphate · dodecahydrate | 4.5 g |
| Perfluoro(methyl vinyl ether) [FMVE] | 136 g |
| Tetrafluoroethylene | 130 g |

were charged in an autoclave having an inner capacity of 10 L. While maintaining the internal temperature at 50°C, a mixture of

| | |
|---|---|
| Ammonium persulfate | 4.5 g |
| Sodium sulfite | 0.1 g |

dissolved in 100 ml of deionized water was charged, starting the polymerization reaction.

A mixed gas of TFE-FMVE (molar ratio = 65:35) was added for 7 hours so that the pressure in the reactor was maintained in the range of 0.9 to 1.0 MPa (total polymerization time: 478 minutes).

After the reaction was completed, a 5 wt.% potassium alum aqueous solution was added to the obtained aqueous emulsion to coagulate the resulting copolymer, followed by washing with water and drying, thereby obtaining 1480 g of rubbery copolymer [Polymer D] (copolymer composition molar ratio analyzed by ¹⁹F-NMR: TFE/FMVE = 65/35).

### Example 5

| | |
|---|---|
| Deionized water | 4000 ml |
| Perfluoro(2-cyano-3,7-dioxa-8-nonene) | 80 g |
| Ammonium 9H-hexadecafluorononanoate | 54 g |
| Disodium hydrogen phosphate · dodecahydrate | 4.5 g |
| Perfluoro(methyl vinyl ether) [FMVE] | 150 g |
| Tetrafluoroethylene | 130 g |

were charged in an autoclave having an inner capacity of 10 L. While maintaining the internal temperature at 50°C, a mixture of

| | |
|---|---|
| Ammonium persulfate | 8 g |
| Sodium sulfite | 0.3 g |

dissolved in 100 ml of deionized water was charged, starting the polymerization reaction.

A mixed gas of TFE-FMVE (molar ratio 65:35) was added for 7 hours so that the pressure in the reactor was maintained in the range of 0.9 to 1.0 MPa (total polymerization time: 536 minutes).

After the reaction was completed, a 5 wt.% potassium alum aqueous solution was added to the obtained aqueous emulsion to coagulate the resulting copolymer, followed by washing with water and drying, thereby obtaining 1700 g of rubbery copolymer [Polymer E] (copolymer composition molar ratio analyzed by ¹⁹F-NMR: TFE/FMVE = 65/35).

### Example 6

Deionized water (4500 ml), 6 g of 1-bromo-2-iodoperfluoroethane, and 40 g of ammonium 9H-hexadecafluorononanoate were charged in an autoclave having an inner capacity of 10 L. After the air in the autoclave was sufficiently replaced by nitrogen gas, a mixed gas of vinylidene fluoride [VDF]-perfluoro(methyl vinyl ether) [FMVE]-tetrafluoroethylene [TFE] (molar ratio = 70:20:10) was compressed until the internal pressure reached 2.0 MPa. Then, 12 g of 1,1-difluoro-2-bromoethylene was charged, and the internal temperature was increased to 50°C.

After a mixture of 10 g of ammonium persulfate, 1 g of a ferrous sulfate heptahydrate, and 1 g of sodium sulfite dissolved in 100 ml of deionized water was charged therein, a mixed gas of VDF-FMVE-TFE (molar ratio = 70:20:10) was additionally compressed until the internal pressure reached 3.1 MPa, starting the polymerization reaction. Since the pressure dropped immediately after the reaction was started, the above additional mixed gas was recompressed at the time when the internal pressure dropped to 3.0 MPa, until the internal pressure reached 3.1 MPa. While maintaining the pressure at 3.0 to 3.1 MPa in this manner, the polymerization reaction was continued for 476 minutes.

After the reaction was completed, a 5 wt.% potassium alum aqueous solution was added to the obtained aqueous emulsion to coagulate the resulting copolymer, followed by washing with water and drying, thereby obtaining 1500 g of rubbery copolymer [Polymer F] (copolymer composition molar ratio analyzed by ¹⁹F-NMR: VDF/FMVE/TFE = 73/17/10).

### Comparative Examples 1 to 6

Polymers G to L, which were rubbery elastomers, were obtained in the same manner as in Examples 1 to 6 except that a predetermined amount of ammonium perfluorooctanoate [FOAA] was used in place of ammonium 9H-hexadecafluorononanoate as an emulsifier, and each polymerization time was changed. The yields and copolymerization compositions of Polymers G to L are the same as those of Polymers A to F, respectively.

**Table 1**

| **Comp. Ex.** | **FOAA Amount (g)** | **Polymerization time (minute)** | **Polymer** |
|---|---|---|---|
| 1 | 23 | 215 | G |
| 2 | 23 | 403 | H |
| 3 | 23 | 295 | I |
| 4 | 54 | 489 | J |
| 5 | 54 | 513 | K |
| 6 | 40 | 470 | L |

### Comparative Example 7

Deionized water (4500 ml) and 23 g of ammonium perfluorooctanoate were charged in an autoclave having an inner capacity of 10 L. After the air in the autoclave was sufficiently replaced by nitrogen gas, a mixed gas of vinylidene fluoride [VDF]-hexafluoropropene [HFP] (molar ratio = 18:82) was compressed until the internal pressure reached 1.3 MPa. Then, 6 g of isopropanol was charged, and the internal temperature was increased to 80°C.

After 10 g of ammonium persulfate dissolved in 100 ml of deionized water was charged therein, a mixed gas of VDF-HFP (molar ratio = 56:44) was additionally compressed until the internal pressure reached 3.5 MPa, starting the polymerization reaction. Since the pressure dropped immediately after the reaction was started, the above additional mixed gas was recompressed at the time when the internal pressure dropped to 3.3 MPa, until the internal pressure reached 3.5 MPa. While maintaining the pressure at 3.3 to 3.5 MPa in this manner, the polymerization reaction was continued for 313 minutes.

After the reaction was completed, a 5 wt.% potassium alum aqueous solution was added to the obtained aqueous emulsion to coagulate the resulting copolymer, followed by washing with water and drying, thereby obtaining 1400 g of rubbery copolymer [Polymer M] (copolymer composition molar ratio analyzed by ¹⁹F-NMR: VDF/HFP = 78/22).

The polymer Mooney viscosities ML_{I+10}(121°C) of Polymers A to M obtained in the examples and comparative examples were measured according to JIS K6300 corresponding to ASTM D2084, and the results shown in Table 2 below were obtained.

**Table 2**

| Ex. | Polymer | Mooney viscosity | Comp. Ex. | Polymer | Mooney viscosity |
|---|---|---|---|---|---|
| 1 | A | 30 | 1 | G | 53 |
| 2 | B | 35 | 2 | H | 55 |
| 3 | C | 45 | 3 | I | 71 |
| 4 | D | 28 | 4 | J | 45 |
| 5 | E | 78 | 5 | K | 95 |
| 6 | F | 48 | 6 | L | 68 |
| | | | 7 | M | 25 |

The results demonstrate that in Polymers A to F and corresponding Polymers G to L having copolymerization compositions equal respectively to those of Polymers A to F, the Mooney viscosities of Polymers A to F, which were prepared by using ammonium 9H-hexadecafluorononanoate as an emulsifier, were remarkably reduced in comparison with the Mooney viscosities of Polymers G to L, which were prepared by using ammonium perfluorooctanoate as an emulsifier. As for Comparative Example 7, although the Mooney viscosity was as low as that of Example 1, the compression set was inferior.

### Reference Examples 1 to 13

The components other than a crosslinking agent and crosslinking aid were kneaded with each of Polymers A to M using a 1L kneader manufactured by Moriyama, and the crosslinking agent and crosslinking aid were then added and mixed by an open roll. The compositions obtained by kneading were vulcanized under the following heating conditions:

Examples other than Example 5 and comparative examples other than Comparative Example 5:
Primary vulcanization at 180°C for 10 minutes
Secondary vulcanization at 230°C for 22 hours

Example 5 and Comparative Example 5:
Primary vulcanization at 190°C for 10 minutes
Secondary vulcanization (in a nitrogen atmosphere)
at 90°C for 4 hours,
temperature raised from 90 to 204°C for 6 hours,
at 204°C for 18 hours,
temperature raised from 204 to 288°C for 6 hours, and
at 288°C for 18 hours

As for the obtained vulcanizates, each of the following items was measured.
Normal state value:
   according to JIS K6253 corresponding to ASTM D2240 (hardness)
   according to JIS K6251 corresponding to ASTM D412 (tensile testing)
Compression set:
   according to JIS K6262 corresponding to ASTM D395 (200°C for 70 hours)
Hot tear resistance:
   according to JIS K6252 corresponding to ASTM D624 (unnotched angle shape, 150°C atmosphere)

The measurement results are shown in Table 3 (Reference Examples corresponding to Examples) and Table 4 (Reference Examples corresponding to Comparative Examples) below, together with the constituents of the compositions (part by weight; Polymers A to M: 100 parts by weight).

**Table 3**

| Ref. Ex. | 1 | 2 | 1 | 4 | 5 | 6 |
|---|---|---|---|---|---|---|
| [Formulation] | | | | | | |
| Polymer | A | B | C | D | E | F |
| MT carbon black | 25 | 20 | 25 | 20 | 20 | 30 |
| Magnesium oxide | 3 | | 3 | | | |
| Calcium hydroxide | 5 | | 5 | | | |
| AF50 | 4 | | 4 | | | |
| B35 | 1 | | 1 | | | |
| Zinc oxide | | 5 | | 3 | | 6 |
| TAIC | | 3 | | 3 | | 4 |
| PH25B-40 | | 3.5 | | 2 | | 1.3 |
| (BAHP)HFP | | | | | 1.4 | |

| [Measurement item] | | | | | | |
|---|---|---|---|---|---|---|
| Hardness (Duro A) | 72 | 68 | 72 | 80 | 80 | 70 |
| Tensile strength (MPa) | 13.2 | 22.2 | 15.3 | 18.2 | 18.0 | 18.6 |
| Elongation (%) | 250 | 310 | 300 | 170 | 170 | 300 |
| Compression set (%) | 13 | 34 | 18 | 20 | 23 | 24 |
| Hot tear resistance (kN/m) | 6.1 | 5.4 | 6.8 | 5.3 | 5.2 | 6.0 |

**Table 4**

| Ref. Ex. | 7 | 8 | 9 | 10 | 11 | 12 | 13 |
|---|---|---|---|---|---|---|---|
| [Formulation] | | | | | | | |
| Polymer | G | H | I | J | K | L | M |
| MT carbon black | 25 | 20 | 25 | 20 | 20 | 30 | 25 |
| Magnesium oxide | 3 | | 3 | | | | 3 |
| Calcium hydroxide | 5 | | 5 | | | | 5 |
| AF50 | 4 | | 4 | | | | 4 |
| B35 | 1 | | 1 | | | | 1 |
| Zinc oxide | | 5 | | 3 | | 6 | |
| TAIC | | 3 | | 3 | | 4 | |
| PH25B-40 | | 3.5 | | 2 | | 1.3 | |
| (BAHP)HFP | | | | | 1.4 | | |

| [Measurement item] | | | | | | | |
|---|---|---|---|---|---|---|---|
| Hardness (Duro A) | 72 | 68 | 71 | 80 | 81 | 70 | 71 |
| Tensile strength (MPa) | 13.3 | 21.3 | 15.6 | 17.9 | 18.3 | 19.6 | 10.9 |
| Elongation (%) | 260 | 310 | 300 | 180 | 170 | 290 | 230 |
| Compression set (%) | 13 | 33 | 19 | 20 | 24 | 26 | 22 |
| Hot tear resistance (kN/m) | 6.0 | 5.7 | 6.3 | 4.8 | 4.9 | 5.5 | 5.1 |

| | | | | | | | |
|---|---|---|---|---|---|---|---|
| Notes: AF50: Bisphenol AF 50% masterbatch, a product of Unimatec B35: Benzyltriphenylphosphonium chloride 35% masterbatch, a product of Unimatec TAIC: Triallyl isocyanurate, a product of Nippon Kasei Chemical PH25B-40: 2,5-dimethyl-2,5-di(tert-butylperoxy)hexane 40% mixture, a product of NOF Corporation (BAHP)HFP: 2,2-bis(3-amino-4-hydroxyphenyl)hexafluoropropane | | | | | | | |

The comparison of the results between Table 3 (Reference Examples corresponding to Examples) and Table 4 (Reference Examples corresponding to Comparative Examples) shows that there is almost no difference in the vulcanizate physical properties between Polymers A to F and corresponding Polymers G to L having copolymerization constitutions and vulcanization compositions equal respectively to those of Polymers A to F; therefore, the use of ammonium 9H-hexadecafluorononanoate as an emulsifier can remarkably reduce the values of Mooney viscosity ML₁₊₁₀(121°C) with little effect on the vulcanizate physical properties, compared to the use of ammonium perfluorooctanoate as an emulsifier.

## Claims

1. A method for manufacturing a fluoroelastomer suitable for injection molding, which comprises carrying out a copolymerization reaction of vinylidene fluoride and hexafluoropropene, a copolymerization reaction of vinylidene fluoride, hexafluoropropene and tetrafluoroethylene, a copolymerization reaction of perfluoro(C₁-C₅ alkyl vinyl ether) and tetrafluoroethylene, or a copolymerization reaction of vinylidene fluoride, perfluoro(C₁-C₅ alkyl vinyl ether) and tetrafluoroethylene, in the presence of a cured site-forming monomer or a bromine- and iodine-containing compound represented by the general formula: RBrₙIₘ (wherein R is fluorohydrocarbon group, chlorofluorohydrocarbon group, chlorohydrocarbon group, or hydrocarbon group; and n and m are independently 1 or 2), using a ωH perfluorocarboxylic acid represented by the general formula: H(CF₂)ₙCOOM (wherein M is hydrogen atom, alkali metal, or ammonium group; and n is 6, 7, or 8) or a salt thereof, as an emulsifier.

2. A method for manufacturing a fluoroelastomer according to claim 1, wherein the cured site-forming monomer is at least one of a bromine group- or iodine group-containing olefin and a bromine group- or iodine group-containing vinyl ether.

3. A method for manufacturing a fluoroelastomer according to claim 1, wherein the polymerization reaction is carried out by an emulsion polymerization method.

4. A fluoroelastomer produced by the method according to claim 1.

5. The use of the fluoroelastomer according to claim 4 as a sealing material.

## Patentansprüche

1. Verfahren zur Herstellung von Fluorelastomer, geeignet für Spritzgussverfahren, umfassend: Ausführen einer Copolymerisationsreaktion von Vinylidenfluorid und Hexafluorpropen, einer Copolymerisationsreaktion von Vinylidenfluorid, Hexafluorpropen und Tetrafluorethylen, einer Copolymerisationsreaktion von Perfluor(C₁-C₅-alkylvinylether) und Tetrafluorethylen oder einer Copolymerisationsreaktion von Vinylidenfluorid, Perfluor(C₁-C₅-alkylvinylether) und Tetrafluorethylen in Gegenwart eines eine gehärtete Stelle bildenden Monomers oder einer Brom- und Iod-enthaltenden Verbindung, dargestellt durch die allgemeine Formel: RBrₙIₘ (worin R eine Fluorkohlenwasserstoffgruppe, Chlorfluorkohlenwasserstoffgruppe, Chlorkohlenwasserstoffgruppe oder Kohlenwasserstoffgruppe ist; und n und m unabhängig 1 oder 2 sind), unter Verwendung einer ωH-Perfluorcarbonsäure, dargestellt durch die allgemeine Formel: H(CF₂)ₙCOOM (worin M ein Wasserstoffatom, ein Alkalimetall oder eine Ammoniumgruppe ist; und n 6, 7 oder 8 ist), oder eines Salzes davon, als ein Emulgator.

2. Verfahren zur Herstellung von Fluorelastomer gemäß Anspruch 1, worin das eine gehärtete Stelle bildende Monomer zumindest eines aus einem eine Bromgruppe oder Iodgruppe enthaltenden Olefin und eine Bromgruppe oder Iodgruppe enthaltenden Vinylethers ist.

3. Verfahren zur Herstellung von Fluorelastomer gemäß Anspruch 1, worin die Polymerisationsreaktion durch ein Emulsionspolymerisationsverfahren durchgeführt wird.

4. Fluorelastomer, hergestellt durch das Verfahren gemäß Anspruch 1.

5. Verwendung des Fluorelastomers gemäß Anspruch 4 als ein Dichtungsmaterial.

## Revendications

1. Procédé de fabrication d'un fluoroélastomère approprié pour un moulage par injection, qui comprend la réalisation d'une réaction de copolymérisation de fluorure de vinylidène et d'hexafluoropropène, une réaction de copolymérisation de fluorure de vinylidène, d'hexafluoropropène et de tétrafluoroéthylène, une réaction de copolymérisation de perfluoro(alkylvinyléther en C₁ à C₅) et de tétrafluoroéthylène, ou une réaction de copolymérisation de fluorure de vinylidène, de perfluoro(alkylvinyléther en C₁ à C₅) et de tétrafluoroéthylène, en présence d'un monomère de formation de site durci ou d'un composé contenant du brome et de l'iode représenté par la formule général : RBr_{Ω}Iₘ (dans laquelle R est un groupe fluorohydrocarbone, un groupe chlorofluorohydrocarbone, un groupe chlorohydrocarbone ou un groupe hydrocarbure ; et n et m sont indépendamment 1 ou 2), à l'aide d'un acide perfluorocarboxylique ωH représenté par la formule générale : H(CF₂)ₙCOOM (dans laquelle M est un atome d'hydrogène, un métal alcalin ou un groupe ammonium ; et n est 6, 7 ou 8) ou un sel de celui-ci, en tant qu'émulsifiant.

2. Procédé de fabrication d'un fluoroélastomère selon la revendication 1, dans lequel le monomère de formation de site durci est au moins l'un d'une oléfine contenant un groupe brome ou un groupe iode et d'un vinyléther contenant un groupe brome ou un groupe iode.

3. Procédé de fabrication d'un fluoroélastomère selon la revendication 1, dans lequel la réaction de polymérisation est réalisée par un procédé de polymérisation en émulsion.

4. Fluoroélastomère produit par le procédé selon la revendication 1.

5. Utilisation du fluoroélastomère selon la revendication 4, en tant que matériau d'étanchéité.
